# EUROPÄISCHE PATENTSCHRIFT

(11) **EP 0 962 785 B1**
(45) Veröffentlichungstag und Bekanntmachung des Hinweises auf die Patenterteilung: **16.04.2003**
(21) Anmeldenummer: 98890169.0
(22) Anmeldetag: 04.06.1998
(51) Int. Cl.: G01S 7/52

(54) **Verfahren zur Untersuchung von Objekten mit Ultraschall**
Method for examining objects with ultrasound
Procédé pour l'examen par ultrasons d'un objet

(43) Veröffentlichungstag der Anmeldung: 08.12.1999
(73) Patentinhaber: GE Medical Systems Kretztechnik GmbH & Co OHG, 4871 Zipf (AT)
(72) Erfinder: Wiesauer, Franz, Dipl.Ing., A-4871 Zipf (AT); Fosodeder, Erwin, Dipl.Ing., A-4871 Zipf (AT); Gritzky, Artur, Dipl.Ing., A-4871 Zipf (AT)
(74) Vertreter: Hübscher, Helmut, Dipl.-Ing.

(56) Entgegenhaltungen:
- EP-A- 0 754 957
- EP-A- 0 806 682
- EP-A- 0 813 074
- WO-A-96/00402
- US-A- 4 135 406
- US-A- 5 485 842

## Beschreibung

Die Erfindung betrifft ein Verfahren nach dem Oberbegriff des Patentanspruches 1.

Die Abtastung eines Volumenbereiches eines zu untersuchenden Objektes bei lagerichtiger Speicherung der aus dieser Abtastung erhaltenen Signale ist bekannt (siehe z. B. AT 358 155 B und entsprechende US 4 135 406). Dabei wird eine Abtastebene (B- oder C-Bild) über das zu untersuchende Objekt geschwenkt. Dieser Schwenk wird entweder manuell durchgeführt (bei gleichzeitiger Messung der Position der Abtastebene bezüglich einer Referenzposition) oder durch spezielle Schallsonden, die diese Schwenkbewegung automatisch durchführen (siehe z.B. AT 1708 GM).

Die Volumenabtastung bringt viele wesentliche Vorteile gegenüber der sonst üblichen Abtastung eines Objektes in einer einzigen Abtastebene (B- oder C-Bild). So ist es mit der Volumenabtastung z. B. möglich, aus den lagerichtig abgespeicherten Echoinformationen das Ultraschallbild beliebiger Schnittebenen zu rekonstruieren, wobei diese Schnittebenen nichts mehr mit einer der ursprünglichen Abtastebenen, die zum Aufbau des Volumendatensatzes verwendet wurden, zu tun haben. Dadurch können Ultraschallbilder erzeugt werden, die aus anatomischen Gründen mit der üblichen B-Bild-Abtastung nicht zugänglich sind.

Weiters können durch bestimmte Visualisierungstechniken, wie sie u. a. in der schon erwähnten AT 1708 GM, den EP 0 754 957 A, 0 806 682 A und 0 813 074 A sowie in der US 5 485 842 A und der WO 96/00402 A beschrieben sind, z. B. die Echos, die von einer reflektierenden Oberfläche im Objekt kommen, so dargestellt werden, daß beim Betrachter ein 3-dimensionaler (3D) Eindruck entsteht. Da der Blickwinkel, aus dem das Objekt rekonstruiert wird, unabhängig von der Aufnahmerichtung ist, kann man mit dieser Technik, z. B. nach der WO 96/00402 A, "virtuell" um das Objekt herumgehen und die entsprechenden Bildeindrücke auf einem Monitor sichtbar machen. Bei den bekannten Verfahren können praktisch nur Informationen verarbeitet werden, die von einer einmaligen Abtastung des Objektes stammen. Der Grund dafür liegt in erster Linie darin, daß bei den bekannten Verfahren für die Abtastung eines Volumensbereiches eine relativ große Zeitspanne benötigt wird. Nach der EP 0 813 074 A werden beispielsweise aufeinanderfolgend aufgenommene Schnittbilder bei der Untersuchung bewegter Organe auf die Bewegung synchronisiert, wobei bei Herzuntersuchungen jede Schnittbildabtastung von einer bestimmten Stelle einer gleichzeitig aufgenommenen EKG-Abtastung getriggert wird, also der Zeitabstand in der Größenordnung einer Sekunde liegt. Die bekannten Verfahren und die dazu vorgesehenen Vorrichtungen sind bei Mechanisierung der Verstellung quer zur Abtastebene lediglich für die Abtastung eines ganz bestimmten Volumensbereiches geeignet. Bei der bekannten 3D-Rekonstruktionstechnik ist nur eine "Bewegung des Beobachters" um das statisch in 3D-Technik dargestellte Objekt möglich, Bewegungen des Objektes selbst, z. B. Bewegungen von Organen oder Föten bei der medizinischen Untersuchung lassen sich in dieser Technik bisher nicht zeigen.

Ein kritischer Punkt der Visualisierung ist das Entfernen störender Informationen, die den Blick auf das gewünschte Objekt verdecken. Ein typisches Szenario in der Geburtshilfe ist die Darstellung des Föten durch abdominalen Ultraschall. Das heißt, zwischen der Ultraschallsonde und dem Föten werden auch Echos vom Bauchgewebe der Mutter dargestellt, die den Blick auf das Gesicht des Föten verdecken. Bei den angewandten 3D Verfahren wird im gescannten Volumen ein "Volumen des Interesses" gewählt, und nur Daten, die innerhalb dieses Bereiches liegen, werden in der Auswertung berücksichtigt. Es erfolgt aber, wie schon oben erwähnt, eine Abtastung des gesamten Volumensbereiches mit entsprechendem Zeitaufwand.

Aufgabe der Erfindung ist die Schaffung eines Verfahrens, das die Darstellung von Bewegungen eines Objektes in 3D-Visualisierung ermöglicht. Die 3D-Visualisierung umfaßt sowohl Verfahren, die einen 3D-Eindruck beim Betrachter hervorrufen (z. B. Oberfläche eines fötalen Gesichtes) als auch Verfahren, die beliebige Schnittebenen im abgetasteten Volumen rekonstruieren, wobei es ferner möglich sein soll, diese Schnittebenen in einem dargestellten 3D-Bild anzuzeigen. Insbesondere soll eine hohe Wiederholrate bei der Abtastung eines Volumens von Interesse gewährleistet werden. Eine Teilaufgabe der Erfindung besteht ferner darin, bei der Abtastung bzw. Auswertung der Abtastsignale Artefakte zu vermeiden.

Die gestellte Aufgabe wird durch die Merkmale des Patentanspruches 1 gelöst. Dabei ist das Verfahren sowohl bei 3D-Ultraschallsonden mit für die B-Bilddarstellung mechanisch bewegtem Schallkopf, vorzugsweise über die Abtastebene schwenkendem Schallkopf, als auch bei 3D-Ultraschallsonden mit einem sogenannten Multielementschallkopf, dessen Einzelelemente die Abtastebene bestimmen, anwendbar. Ganz wesentlich für die Erfindung ist, daß bei der Abtastung nur der interessante Volumensbereich ausgesucht und abgetastet wird, so daß relativ hohe Abtastraten dieses Volumensbereiches ermöglicht und Zeitverluste durch die Abtastung überflüssiger Volumensbereiche vermieden werden. Überdies läßt sich durch das erfindungsgemäße Verfahren eine kontinuierliche Abtastung realisieren, was bedeutet, daß während der Abtastung des interessanten Volumensbereiches keine Pausen zwischen der Abtastung einzelner Schnittbildebenen eingehalten werden.

Um im letzteren Fall Artefakte oder ein Flimmern des Bildes zu vermeiden, wird der Verfahrensschritt nach Anspruch 2 eingesetzt. Da nach dem erfindungsgemäßen Verfahren gleichzeitig mit der B-Bildabtastung auch der Vorschub der Volumensabtastung erfolgt, ergeben sich schräg geneigte Abtastspuren, bei denen aber Neigung und Länge wieder davon abhängen, welcher Volumensbereich ausgewählt wird. Bei Verwendung eines mechanisch über die B-Bildebene hinund herschwenkenden Schallkopfes folgt die Abtastspure einer Zick-Zack-Linie. Bei Geräten mit Mehrfachschallkopf zur B-Bildabtastung kann die Impulsauslösung fortlaufend vom einen zum anderen Ende erfolgen. Um hier die oben genannte Bedingung zu erfüllen, wird gemäß Anspruch 3 vogegangen.

Die Speicherung der Erkennungssignale aus dem abgetasteten Volumen erfolgt vorzugsweise gemäß Anspruch 4 in einem vektororientierten Volumensspeicher.

In weiterer Folge kann erfindungsgemäß die Anpassung an das Objekt bzw. die Auswahl des interessanten Volumensbereiches gemäß Anspruch 5 erfolgen.

Bei ruhend auf das Objekt aufgesetzter 3D-Ultraschallsonde und Auswahl eines interessanten Volumensbereiches werden sich innerhalb dieses Volumensbereiches zwischen aufeinanderfolgenden Abtastungen des Volumens relativ geringe Änderungen an einzelnen Bildpunkten ergeben. Um eine weitgehend scharfe Darstellung zu erzielen, kann in weiterer Folge gemäß Anspruch 6 vorgegangen werden.

Weitere Einzelheiten und Vorteile des Erfindungsgegenstandes entnimmt man der nachfolgenden Zeichnungsbeschreibung.

Die Erfindung wird anhand der Zeichnung beispielsweise näher erläutert. Es zeigen
- Fig. 1: eine 3D-Ultraschallsonde im Schema,
- Fig. 2: die Spuren der Abtastebenen bei einer möglichen Ausführungsform,
- Fig. 3: ein Diagramm, in dem Funktions-(Abtast)- und Einstellzeiten bei einer 3D-Sonde nach dem Stand der Technik über die Zeit veranschaulicht wurden,
- Fig. 4: ein der Fig. 3 entsprechendes Diagramm für das erfindungsgemäße Verfahren,
- Fig. 5: Abtastspuren, wie sie bei einer 3D-Sonde gemäß dem Stand der Technik entstehen würden, wenn auch beim Rücklauf der Abtasteinheit in die Ausgangsposition abgetastet wird,
- Fig. 6: entsprechende Abtastspuren, wie sie nach dem erfindungsgemäßen Verfahren auftreten,
- Fig. 7: ein Blockschaltschema der zur 3D-Darstellung eingesetzten Teile eines nach dem erfindungsgemäßen Verfahren arbeitenden Ultraschall-Untersuchungsgerätes und
- Fig. 8: ein Flußdiagramm für eine mögliche Realisierung des Verfahrensablaufes.

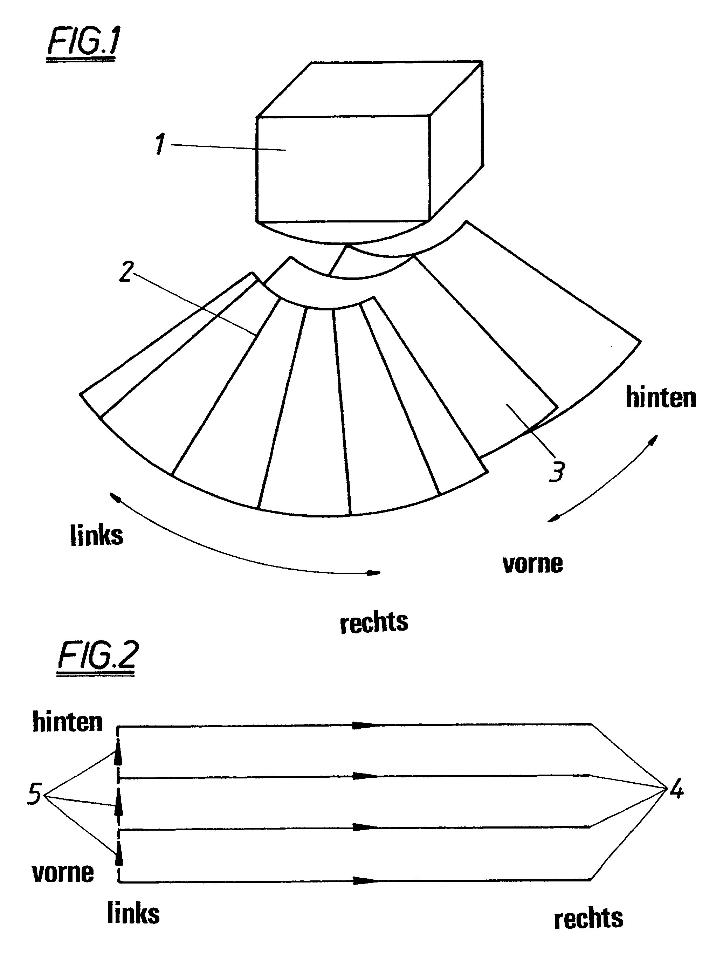

Fig. 1 zeigt schematisch eine Schallsonde 1, die aus einzelnen Schallstrahlen 2 in einer Abtastebene 3 ein B-Bild aufbaut, wobei durch Verstellung der Schallerzeuger aufeinanderfolgende B-Bilder aufgenommen und damit ein Volumen abgetastet wird. Ohne Beschränkung wird zur Erläuterung angenommen, daß der Schallstrahl im B-Bild von links nach rechts erfolgt und die Querverstellung der Abtastebene von vorne nach hinten vor sich geht.

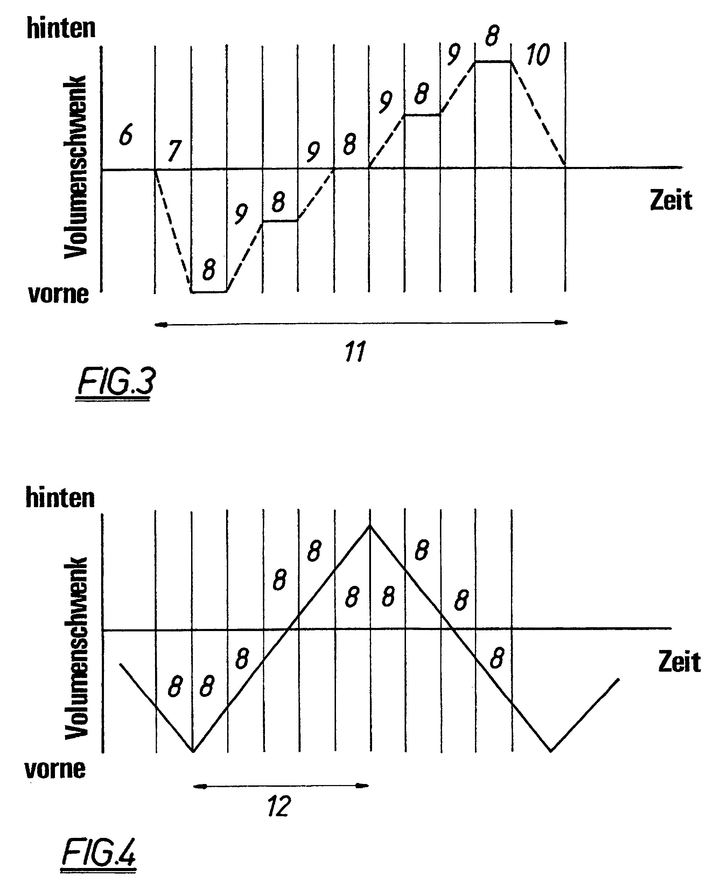

Um die Idee der Erfindung zu erläutern, betrachten wir einen 3D-Abtastvorgang (Fig. 1), wie er heute zusammen mit speziellen Sonden angewandt wird. Fig. 2 zeigt die Spuren der Abtastebenen (B-Bild) 4 auf einer Ebene, die orthogonal zur mittleren Schallinie der mittleren Abtastebene liegt. Dabei liegen die Spuren der Abtastebenen parallel zueinander und orthogonal zur Projektion der Schwenkrichtung des B-Bildes 5. Es wird dabei angenommen, daß der Schallstrahl trägheitslos von "links" nach "rechts" zurückgesetzt werden kann. Diese Voraussetzung wird erfüllt, wenn für die Erzeugung des B-Bildes eine elektronische Sonde verwendet wird. Die bevorzugte Lösung sieht eine elektronische Sonde vor. Betrachten wir den Abtastvorgang (Ort des B-Bildes) über der Zeit (Fig. 3). Vor dem Beginn der Abtastung liegt das B-Bild in der Mittelposition 6 bezüglich der Ultraschallsonde. Nach Start der Abtastung wird das B-Bild in die Position 7 ("vorne") bewegt, an dieser Position ein B-Bild aufgenommen (8), danach wird die Abbildungsebene in die nächste Position bewegt (9), danach neue Aufnahme (8) etc.. Am Ende der Abtastbewegung (Position "hinten") wird die Abtastebene wieder in die Ausgangsposition bewegt (10). D.h. der Vorgang 11 dauert um die Summe der Zeiten 6, 7, 9, 10 signifikant länger als die Summe der Zeiten 8, die für die Schallaufnahme selbst nötig werden.

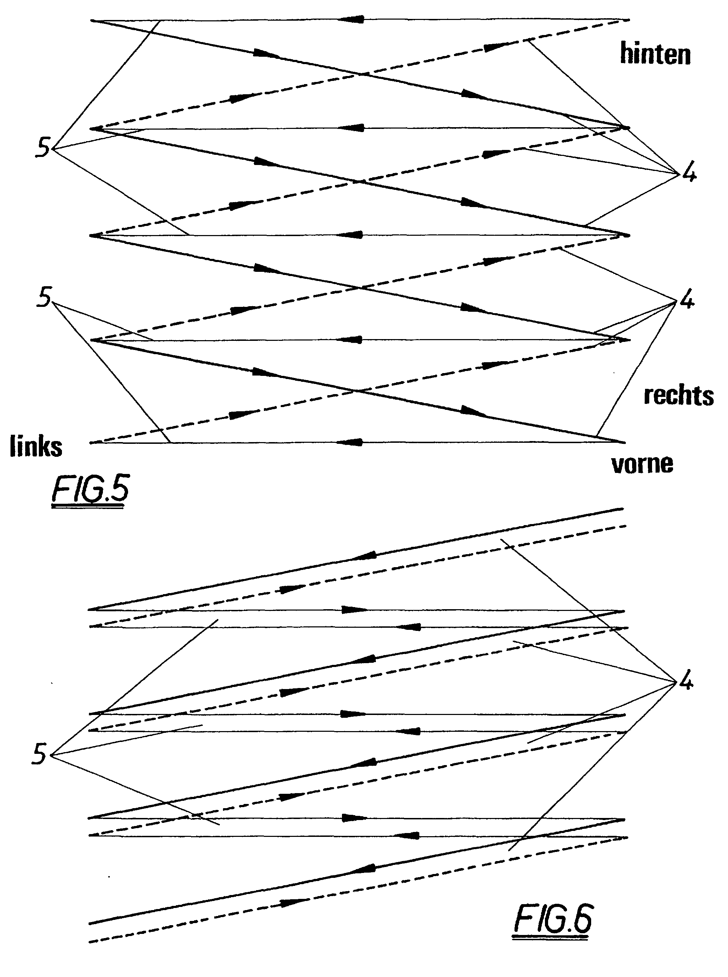

Erfindungsgemäß wird das Volumen kontinuierlich abgetastet, wobei die Abtastbewegung und die B-Bildaufnahme gleichzeitig ablaufen. Diese Situation wird in Fig. 4 im gleichen Zeitmaßstab dargestellt wie eine 3D-Abtastung gemäß Stand der Technik in Fig. 3. Wichtig ist, daß eine Abtastung und Speicherung der Signale sowohl in der Bewegung von "vorne" nach "hinten" als auch anschließend von "hinten" nach "vorne" stattfindet. Man erkennt, daß der Abtastvorgang 12 signifikant kürzer ist als der Abtastvorgang in Fig. 3.

Betrachten wir nun die Spuren der Abtastebene (Fig. 5), so erkennen wir, daß sie nicht mehr orthogonal zur Bewegungsrichtung verlaufen sondern leicht gekippt dazu. Das kommt davon, daß sich die Lage der B-Bildebene während der Abtastung verändert. Die gerade Spur ist eine erste Annäherung an die tatsächliche Kurve, die von der gewählten Abtastbewegung abhängt. Im Rücklauf der Abtastbewegung sind die hier der besseren Übersichtlichkeit halber strichliert eingezeichneten Spuren der Abtastebene in die andere Richtung geneigt. Da die Daten dieser Ebenen im Rücklauf die Daten der entsprechenden Ebenen des Vorlaufs im 3D-Speicher ersetzen (überschreiben), resultiert daraus eine Unschärfe, die entweder als "Wackeln" des rekonstruierten Bildes oder als Unschärfe (bei gefilterter Darstellung) sichtbar wird.

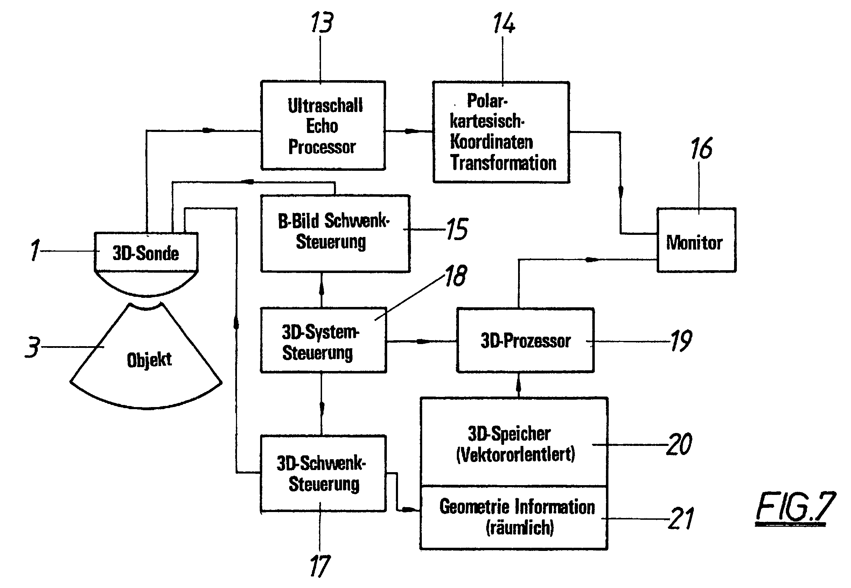

Gemäß der Erfindung wird die Aufnahmekontrolle (und die Speicherkontrolle) so gesteuert, daß beim Hinlauf der 3D-Abtastung z. B. von "links" nach "rechts" eingeschrieben wird, während beim Rücklauf der 3D-Abtastung die B-Bild Einschreibrichtung umgekehrt wird ("rechts" nach "links"). Daraus ergeben sich die Spuren der Abtastebenen, wie in Fig. 6 dargestellt, d. h. die Abtastebenen decken sich im Vor- und Rücklauf. Daraus folgt eine nicht wackelnde, scharfe Abbildung des Objektes.

In einem herkömmlichen 2D-Ultraschallsystem erfolgt die Abspeicherung der Ultraschall-Bilder (im sogenannten "Film-Modus") in einem kartesischen Koordinatensystem. Dabei werden die Informationen, die aus dem Abtaststrahl des Ultraschallgerätes gewonnen werden, auf die Bildelemente ("Pixel") nach geometrischen Beziehungen aufgeteilt, und Pixel, die von keinem Ultraschall-Abtaststrahl getroffen werden, aus den Werten der benachbarten Pixel berechnet. Wenn z. B. mehrere Abtaststrahlen durch ein Pixel gehen, kann trotzdem nur ein Wert für dieses Pixel berechnet werden. Wird nun aus solchen abgespeicherten kartesischen Datensätzen nachträglich ein Volumen rekonstruiert, kann auf die ursprüngliche Information nicht mehr zugegriffen werden. Daher ist es Teil der Erfindung, die gesamte Information jedes einzelnen Abtaststrahles zu speichern (Vektor-orientiertes Speichern), und aus diesen Daten jede Rekonstruktion der Volumen-Information (z. B. Oberflächen-Berechnung, beliebige Ebenen) direkt zu berechnen. Normalerweise gehen alle Abtaststrahlen für das B-Bild durch ein Drehzentrum. Liegt das Drehzentrum nahe dem Bildbeginn, spricht man von Sektor-Abtastung, liegt es im Unendlichen, spricht man von einer linearen Abtastung, und liegt es dazwischen, spricht man von einer Konvex-Abtastung. Natürlich sind auch Kombinationen denkbar, wie z. B. in der Mitte des Bildes lineare Abtastung und am Rand des Bildes eine Sektor-Abtastung (solche Verfahren sind auch aus Patenten bekannt). Der Volumenschwenk erfolgt orthogonal zur B-Bild-Schwenkebene und kann ebenfalls ein Sektor-, Konvexoder Linear-Schwenk sein; hat aber nicht notwendigerweise die gleichen Bewegungsparameter (z. B. Schwenkradius) wie der B-Bild Schwenk. Daraus ergibt sich, daß die Adressierung des Vektor-orientierten 3D-Speichers einem Torus-Koordinaten System entspricht.

Eine bevorzugte Einrichtung zur Durchführung des erfindungsgemäßen Verfahrens und ihre Funktionsweise werden im folgenden beschrieben. Die beschriebene Art ist nur eine von mehreren möglichen Lösungen.

Das System für die kontinuierliche 3D-Abtastung eines Objektes mit Hilfe von Ultraschall ist in Fig. 7 dargestellt. Es besteht aus einer standardmäßigen Ultraschaliverarbeitung (Ultraschall-Echo-Prozessor 13, polar-kartesisch Koordinaten Transformation 14, B-Bild-Schwenk-Steuerung 15 und Monitor 16 zur Anzeige der Ultraschall-Bilder) und den erfindungsgemäßen System-Komponenten wie einer speziellen Sonde 1 zur Volumen-Abtastung, einer Kontrolleinheit 17 der 3D-Schwenkbewegung, einer abgeänderten Steuerung 15 des B-Bild-Schwenks, einer allgemeinen 3D-Systemsteuerung 18, einem 3D-Prozessor 19, einem 3D-Speicher 20 und einer Einheit zur Geometrieinformation 21. Zur Ausgabe der 3D-Daten kann wieder der System-Monitor 16 verwendet werden. Das richtige Zusammenspiel aller Einheiten wird von der 3D-System Steuerung 18 gewährleistet.

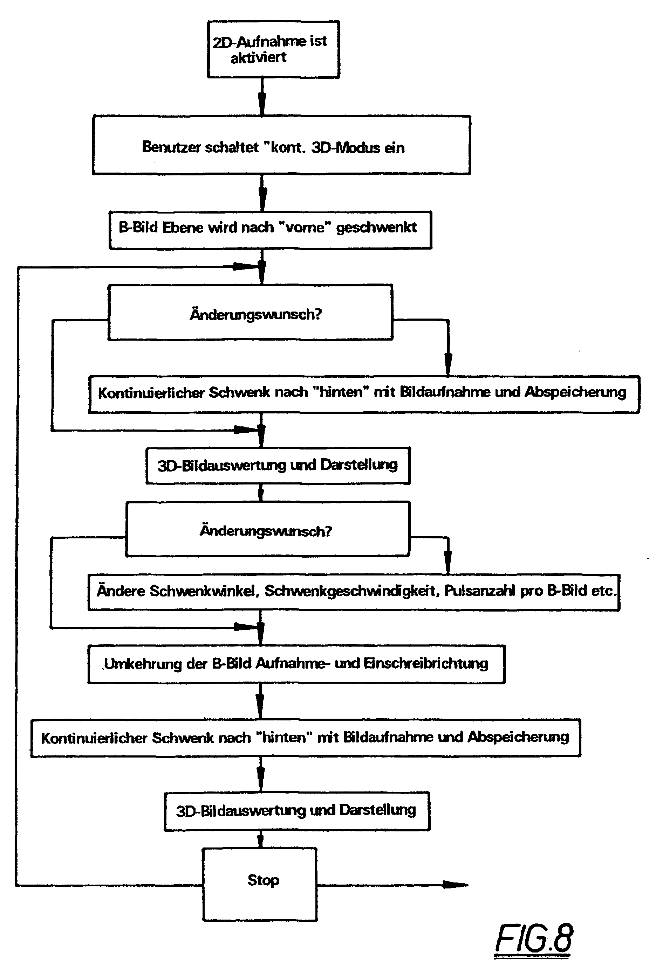

Betrachten wir nun eine mögliche Realisierung des Ablaufs zur Realisierung der erfindungsgemäßen kontinuierlichen 3D-Abtastung (Fig. 8). Der Vorgang beginnt mit der 2D-Abtastung des Objektes (wie Stand der Technik) zur groben Orientierung (z. B. wie liegt der Fötus in der Gebärmutter). Nach Aktivierung der kontinuierlichen 3D-Abtastung wird die B-Bild Ebene in eine Endposition des 3D-Schwenkbereiches bewegt ("vorne"). Der Schwenkbereich kann jederzeit dem Objekt angepaßt werden (sowohl in B-Bild als auch in 3D-Schwenkrichtung). Nun wird die B-Bild Aufnahme aktiviert und das B-Bild mit konstanter Wiederholrate (z. B. zwischen 10 - 30 Bilder pro Sekunde) von z. B. "links" nach "rechts" abgetastet (mit vorgegebenem änderbarem Winkel). Die von der Ultraschallverarbeitung erzeugten Vektoren werden im 3D-Speicher 20 an der der Position entsprechenden Stelle abgespeichert. Wenn die andere Endposition des 3D-Schwenks erreicht wird ("hinten") (z. B. nach 0,1 bis 2 Sekunden) startet der 3D-Prozessor 19 die Auswertung der abgespeicherten Daten. Dabei wird bei der speziellen Lösung mittels eines Schwellwertes entschieden, welche Echos für die Berechnung der Objekt-Oberfläche herangezogen werden (die spezielle Lösung sieht auch andere Algorithmen vor wie: Maximum Intensität (findet stark reflektierende Strukturen wie Knochen / Knorpel etc.), Minimum Intensität (findet schwach reflektierende Strukturen wie Blutgefäße, Zysten etc.), transparent Abbildung (projiziert "gläsernen" Körper)). Gleichzeitig wird bei der bevorzugten Durchführung des erfindungsgemäßen Gedankens auch ein Schnittbild (oder 3 orthogonal zu einander stehende Schnittbilder) rekonstruiert und dargestellt, was eine leichtere Orientierung während der Untersuchung des Objektes erlaubt. Die hier getrennt beschriebenen Vorgänge "3D-Abtastung mit Speicherung" und Volumenauswertung laufen in der bevorzugten Lösung parallel ab (während das Volumen n aufgenommen wird, wird das Volumen n-1 ausgewertet). Die B-Bild Ebene wird nun zurückgeschwenkt (von "hinten" nach "vorne"). Dabei wird nun gemäß der Erfindung die Abtastrichtung des B-Bildes ebenfalls umgedreht (von "rechts" nach "links"), um die gleichen Positionen wie bei der ersten SchwenkBewegung zu erreichen (wie in Fig. 6 erklärt wurde). Wenn wiederum die Ausgangsposition ("vorne") erreicht wurde, beginnt die Auswertung des 3D-Datensatzes von Neuem wie oben beschrieben.

Dieser Zyklus wiederholt sich bis zur Beendigung der kontinuierlichen 3D-Abtastung durch Benutzer.

## Patentansprüche

1. Verfahren zur Untersuchung von Objekten mit Ultraschall, bei dem ein Volumensbereich des Objektes mittels einer 3D-Ultraschallsonde (1) Ullterschallwellen abgetastet wird, wobei eine Abtastebene (3) der zur möglichen B-Bilddarstellung bestimmten Sender/Empfängereinheit während des Abtastvorganges in der 3D-Ultraschallsonde (1) quer zu sich selbst über den Volumensbereich verstellt wird, die aus den Echoimpulsen erzeugten Signale an dem Ort ihrer Entstehung geometrisch zugeordneter Stelle positionsrichtig in einem Volumenspeicher (20) gespeichert und nach wählbaren Abfragekriterien zum Aufbau von Bilddarstellungen auf wenigstens einer Anzeigeeinheit (16) verwendet werden, aus dem von der aufgesetzten, unbewegten 3D-Ultraschallsonde (1) erfaßbaren, größeren Volumensbereich des Objektes ein kleinerer Volumensbereich von Interesse ausgewählt und nur die aus diesem Volumensbereich stammenden Signale für eine 3D-Darstellung verwendet werden, **dadurch gekennzeichnet, daß** nur der durch Einstellung der Grenzen der innerhalb der Abtastebene der B-Bilddarstellung bestrichenen Fläche und des Verstellweges quer zu dieser Abtastebene zur Volumensabtastung ausgewählte interessierende Volumensbereich zumindest weitgehend kontinuierlich durch während der Verstellung der B-Bildebene (3) quer zu sich selbst abgegebene und verarbeitete Schallimpulse (4) abgetastet wird und mittels eines 3D-Prozessors (14) aus diesen im Volumenspeicher (20) gespeicherten Signalen wenigstens die die 3D-Darstellung ergebenden Signale abgefragt und der Bilddarstellung zugeführt werden.

2. Verfahren nach Anspruch 1, **dadurch gekennzeichnet, daß** bei einer 3D-Ultraschallsonde (1) mit hin- und hergehend über den Volumensbereich von Interesse vor- und zurückverstellbarer Sender/Empfängereinheit die Abtastsignale beim Rücklauf zumindest annähernd auf den gleichen Abtastspuren wie beim Hinlauf erzeugt werden (Fig. 6).

3. Verfahren nach den Ansprüchen 1 und 2, **dadurch gekennzeichnet, daß** bei von dem einen zum anderen Rand der B-Bildabtastung verlaufender Auslösereihenfolge der Abtastimpulse beim Rücklauf der Volumensabtastung die Auslösereihenfolge umgekehrt wird, so daß die B-Bilder dieselbe Lage im Raum wie beim Hinlauf einnehmen (Fig. 4).

4. Verfahren nach Anspruch 1, **dadurch gekennzeichnet, daß** der Volumensspeicher (20) vektororientiert organisiert wird.

5. Verfahren nach Anspruch 1, **dadurch gekennzeichnet, daß** die Anpassung an das Objekt wahlweise über die Einstellung des B-Bild-Schwenkwinkels, eines 3D-Schwenkwinkels für die Volumensabtastung, der Impulsanzahl zum Aufbau eines B-Bildes, der Schwenkgeschwindigkeit für die Volumensabtastung, der maximalen Tiefe, aus deren Echos verarbeitet werden, und bzw. oder der Wahl jener beliebigen Fläche, von der aus das Volumen beleuchtet bzw. betrachtet wird, vorgenommen wird.

6. Verfahren nach Anspruch 1, **dadurch gekennzeichnet, daß** auf der Anzeigeeinheit (16) zwischen zwei oder mehreren zeitlich nacheinander aufgenommenen Bildern interpoliert wird.

## Claims

1. A method of investigating objects by means of ultrasound, wherein a three-dimensional region of the object is scanned with ultrasonic waves by means of a 3D ultrasonic probe (1), wherein during the scanning process, in the 3D ultrasonic probe (1), a transmitter-receiver unit scanning plane (3) intended for possible B-image representation is adjusted transversely of itself over the three-dimensional region, the signals generated from the echo pulses are stored in a three-dimensional store (20) in the correct position at a place geometrically associated with the place where they originated and are used in accordance with selectable interrogation criteria to construct image representations on at least one display unit (16), a smaller three-dimensional region of interest is selected from the larger three-dimensional region of the object detectable by the mounted stationary 3D ultrasonic probe (1) and only the signals originating from said smaller region are used for 3D representation, **characterised in that** only the region of interest selected for three-dimensional scanning by adjusting the limits of the area covered within the scanning plane of the B-image representation and by adjusting the travel transversely of the said scanning plane is scanned at least substantially continuously by sound pulses (4) delivered and processed during adjustment of the B-image plane (3) transversely of itself, and out of the said signals stored in the three-dimensional store (20) at least the signals resulting in the 3D representation are called up by a 3D processor (14) and supplied for image representation.

2. A method according to claim 1, **characterised in that** in the case of a 3D ultrasonic probe (1) comprising a transmitter-receiver unit movable in reciprocation over the three-dimensional region of interest, the scanning signals during the return movement are generated at least approximately on the same scanning tracks as during the outward movement (Fig. 6).

3. A method according to claims 1 and 2, **characterised in that** in the case of a triggering sequence of scanning pulses moving from one edge to the other of the B-image scan, the triggering sequence during the return movement of the three-dimensional scan is reversed, so that the B-images occupy the same position in space as during the outward movement (Fig. 4).

4. A method according to claim 1, **characterised in that** the three-dimensional store (20) is organised in vector-oriented manner.

5. A method according to claim 1, **characterised in that** the adaptation to the object is made optionally by adjusting the B-image angle of traverse, a 3D angle of traverse for the three-dimensional scan, the number of pulses for constructing a B-image, the speed of traverse for the three-dimensional scan, the maximum depth at which echoes are processed, and/or by arbitrary selection of an area from which the space is illuminated or observed.

6. A method according to claim 1, **characterised by** interpolation between two or more images successively recorded on the display unit (16).

## Revendications

1. Procédé pour l'examen d'objets par ultrasons, dans lequel une zone de volume de l'objet est explorée par des ondes ultrasonores, à l'aide d'une sonde à ultrasons 3D (1), un plan d'exploration (3) de l'unité émetteur/récepteur, conçue pour obtenir une éventuelle illustration imagée B, étant déplacée transversalement par rapport à elle-même sur la zone de volume, pendant le processus d'exploration dans la sonde à ultrasons 3D (1), les signaux, générés à partir des impulsions d'écho, à l'emplacement géométriquement associé au site de leur production, étant mémorisés à la position correcte dans une mémoire de volume (20) et, selon des critères d'interrogation sélectionnables, sont utilisés, selon des critères d'interrogation sélectionnables, pour construire des représentations imagées sur au moins une unité d'affichage (16), à partir de la zone de volume plus grande, distribuée, détectable par la sonde à ultrasons 3D (1) stationnaire, de l'objet étant sélectionnée une plus petite zone de volume présentant un intérêt, et seuls les signaux provenant de cette zone de volume étant utilisés pour une représentation 3D, **caractérisé en ce que** seule la zone de volume présentant un intérêt, sélectionnée pour effectuer un balayage du volume, par un réglage des limites de la surface balayée à l'intérieur du plan d'exploration de l'illustration de l'image B et un réglage de la course de déplacement, transversalement par rapport à ce plan d'exploration, est explorée au moins de façon largement continue, par des impulsions sonores (4), délivrées pendant le déplacement du plan image B (3) transversalement par rapport à lui-même, et traitées et, au moyen d'un processeur 3D (14), à partir de ces signaux, mémorisés dans la mémoire de volume (20), au moins les signaux donnant la représentation 3D sont interrogés et amenés à l'illustration imagée.

2. Procédé selon la revendication 1, **caractérisé en ce que**, dans le cas d'une sonde à ultrasons 3D (1) ayant une unité émetteur/récepteur, déplaçable dans un sens et dans l'autre sur la zone de volume présentant un intérêt, lors de la course de retour, les signaux d'exploration sont produits au moins à peu près sur les mêmes pistes d'exploration que lors de la course aller (Fig. 6).

3. Procédé selon la revendication 1 et 2, **caractérisé en ce que** dans le cas d'un ordre de succession de déclenchement des impulsions d'exploration, s'étendant d'un bord à l'autre de l'exploration de d'image B, lors de la course de retour de l'exploration du volume, l'ordre de succession de déclenchement est inversé, de sorte que les images B ont la même position de l'espace que celles qu'elles ont au trajet aller (Fig. 4).

4. Procédé selon la revendication 1, **caractérisé en ce que** la mémoire de volume (20) est organisée de façon orientée vectorieliement.

5. Procédé selon la revendication 1, **caractérisé en ce que** l'adaptation à l'objet est effectuée au choix par le biais du réglage de l'angle de pivotement d'image B, d'un angle de pivotement 3D pour l'exploration de volume, du nombre d'impulsions pour construire une image B, de la vitesse de pivotement pour l'exploration de volume, de la profondeur maximale, d'où des échos sont traités, et/ou du choix d'une surface quelconque d'où le volume est illuminé ou observé.

6. Procédé selon la revendication 1, **caractérisé en ce que** sur l'unité d'affichage (16) est effectuée une interpolation entre deux ou plusieurs images enregistrées temporellement les unes après les autres.
